# EUROPÄISCHE PATENTSCHRIFT

(11) **EP 2 438 199 B1**
(45) Veröffentlichungstag und Bekanntmachung des Hinweises auf die Patenterteilung: **05.07.2017**
(21) Anmeldenummer: 10719326.0
(22) Anmeldetag: 05.05.2010
(51) Int. Cl.: C21B 5/00, C21B 7/00

(54) **VERFAHREN ZUR GLEICHZEITIGEN HERSTELLUNG VON EISEN UND EINES CO UND H2 ENTHALTENDEN ROHSYNTHESEGASES**
METHOD FOR THE SIMULTANEOUS PRODUCTION OF IRON AND A CRUDE SYNGAS CONTAINING CO AND H2
PROCÉDÉ PERMETTANT DE PRODUIRE SIMULTANÉMENT DU FER ET UN GAZ DE SYNTHÈSE BRUT CONTENANT CO ET H2

(30) Priorität: 25.05.2009 DE 102009022510
(43) Veröffentlichungstag der Anmeldung: 11.04.2012
(73) Patentinhaber: ThyssenKrupp Industrial Solutions AG, 45143 Essen (DE)
(72) Erfinder: MENZEL, Johannes, 45731 Waltrop (DE); von Morstein, Olaf, 45149 Essen (DE)
(74) Vertreter: Lorenz, Bernd Ingo Thaddeus
(86) Internationale Anmeldenummer: PCT/EP2010/056083
(87) Internationale Veröffentlichungsnummer: WO 2010/136306

(56) Entgegenhaltungen:
- EP-A1- 1 031 534
- EP-A2- 0 209 880
- KR-A- 20010 062 899
- KR-A- 20030 054 939
- US-A- 2 715 575
- US-A- 4 317 677
- SKÖLD B-E: "ULCOS, the European initiative for CO2-lean steelmaking" NEWSLETTER FROM MEFOS, LULEA, SWEDEN, 1. Dezember 2006 (2006-12-01), Seiten 1-4, XP002560413

## Beschreibung

Die Erfindung betrifft ein Verfahren zur gleichzeitigen Herstellung von Eisen und eines CO und H₂ enthaltenden Rohsynthesegases nach dem Oberbegriff des Patentanspruches 1. Ein solches Verfahren ist aus EP 0 209 880 A2 bekannt.

Synthesegase sind Gasgemische, die in Synthesereaktionen zum Einsatz kommen und überwiegend aus Kohlenmonoxid und Wasserstoff bestehen. Für einige CO/H₂-Kombinationen haben sich aufgrund ihrer Herkunft oder ihrer Verwendung spezielle Bezeichnungen wie Wassergas, Spaltgas, Methanolsynthesegas oder Oxogas etabliert. Das Synthesegas kann als Ausgangsstoffgemisch für die Produktion von Flüssigtreibstoffen dienen. So wird Synthesegas beispielsweise beim Fischer-Tropsch-Verfahren zur Erzeugung von Dieselkraftstoff eingesetzt. Benzinkraftstoffe können nach dem MTG-Verfahren (Methanol to Gasoline) produziert werden, bei dem das Synthesegas zunächst zu Methanol umgesetzt wird, welches in weiteren Verfahrensschritten zu Benzin umgewandelt wird.

Prinzipiell können alle kohlenstoffhaltigen Stoffe zur Synthesegasherstellung eingesetzt werden. Dazu zählen sowohl die fossilen Brennstoffe Kohle, Erdöl und Erdgas als auch weitere Einsatzmaterialien wie z.B. Kunststoffe, Torf, Holz oder andere Biomasse, wie städtische oder landwirtschaftliche Abfälle. Werden Feststoffe eingesetzt, müssen diese zunächst aufwendig zerkleinert werden, damit durch partielle Oxidation oder Wasserdampfspaltung ein Rohsynthesegas erzeugt werden kann. Das Rohsynthesegas wird danach in weiteren Schritten aufbereitet. Alle diese Maßnahmen führen zu hohen Investitionskosten, die ein Hindernis für die Produktion von Flüssigkraftstoffen aus Synthesegas sind.

Bei einem aus EP 0 209 880 A2 bekannten Verfahren, von dem die Erfindung ausgeht, wird ein Hochofen mit Eisenerzen und kohlenstoffhaltigen Reduktionsmitteln beschickt und werden in den Hochofen technisch reiner Sauerstoff, Kohlenstaub und Wasserdampf für den Hochofenprozess eingeblasen. Zusätzlich wird dem Hochofen CO₂ zugeführt, um das CO/H₂-Verhältnis des den Hochofen als Gichtgas verlassenden Rohsynethesegases zu steuern und/oder eine Einblastemperatur der Sauerstoffeindüsung zu moderieren. Durch das bekannte Verfahren kann ein stickstofffreies Hochofengas erzeugt werden und der Koksanteil zur Reduzierung von Eisenerz reduziert werden.

In US 4 013 454 wird ein Verfahren zur gleichzeitigen Herstellung von Eisen und Methanol oder Ammoniak beschrieben. Einem Hochofen werden Eisenerze, kohlenstoffhaltige Reduktionsmittel und ein Brenngas aus Sauerstoff und CO₂ zugeführt. Im Hochofenprozess fällt ein Gichtgas an, das etwa 80 % CO und 20 % CO₂ enthält. Das Gichtgas wird durch chemische Reaktionen sowie Adsorptionsvorgänge zu einem Synthesegas aufbereitet, das für einen Methanolprozess oder einen Ammoniakprozess eingesetzt werden kann. Die Umwandlung des im Wesentlichen aus CO und CO₂ bestehenden Gichtgases in ein für den Methanolprozess oder Ammoniakprozess geeignetes Synthesegas erfordert mehrere zusätzliche Verfahrensstufen und folglich zusätzliche Investitionen.

Bei einem aus EP 1 031 534 A1 bekannten Verfahren zur Amoniaksynthese wird in einem Hochofenprozess ein stickstoffreiches Gichtgas erzeugt, welches im Wesentlichen Stickstoff, CO, CO₂ und H₂ enthält. In den Hochofen wird Blasluft eingebracht.

Aufgabe der vorliegenden Erfindung ist es, sowohl die Investitionskosten als auch die Betriebskosten für die Synthesegaserzeugung zu verringern und die CO₂-Bilanz zu verbessern.

Gegenstand der Erfindung und Lösung dieser Aufgabe ist ein Verfahren nach Anspruch 1 zur gleichzeitigen Herstellung von Eisen und eines CO und H₂ enthaltenden Rohsynthesegases unter Verwendung eines Hochofens, der mit Eisenerzen und kohlenstoffhaltigen Reduktionsmitteln beschickt wird.

Bei dem erfindungsgemäßen Verfahren ist die dem Hochofen zugeführte Menge an kohlenstoffhaltigen Reduktionsmitteln größer als die für die Eisenherstellung benötigte Brennstoffmenge,

Dem Hochofen wird technisch reiner Sauerstoff für den Hochofenprozess und zur Erzeugung des Rohsynthesegases zugeführt. Zusätzlich wird dem Hochofen CO₂ zugeführt wird, um das CO/H₂-Verhältnis des den Hochofen als Gichtgas verlassenden Rohsynthesegases zu steuern und/oder um die Einblastemperatur der Sauerstoffeindüsung zu moderieren.

Erfindungsgemäß wird mindestens ein Teil des Rohsynthesegases mittels CO-Konvertierung unter Zusatz von Wasserdampf zu Wasserstoff und CO₂ umgesetzt und wird in einer nachgeschalteten Druckwechseladsorptionsanlage (Pressure Swing Adsorption - PSA-Anlage) Wasserstoff gewonnen, wobei ein CO₂-reicher Abgasstrom aus der Druckwechseladsorptionsanlage zur Temperaturmoderation wieder in den Hochofen zurückgeführt wird, so dass das dem Hochofen zugeführte CO₂ aus dem Rohsynthesegas, welches einer CO₂-Konvertierung unterzogen wurde, gewonnen wird. Insbesondere kann der CO₂-reiche Abgasstrom aus der Druckwechseladsorptionsanlage zur Kühlung der Sauerstoffeindüsung genutzt werden.

Der Hochofen wird in der Regel von oben schichtweise mit Erz und Koks beschickt. Das Füllgut rutscht in immer heißere Zonen des Hochofens nach unten. Sauerstoff wird im unteren Teil des Hochofens eingeblasen. Dadurch verbrennt ein Teil des kohlenstoffhaltigen Reduktionsmittels zu Kohlendioxid und Kohlenmonoxid, die in die Erzschüttung aufsteigen. Das Eisenerz wird von den aufsteigenden Gasen und dem heißen kohlenstoffhaltigen Reduktionsmittel zu metallischem Eisen reduziert. Erfindungsgemäß wird dem Hochofen gegenüber der reinen Eisenherstellung eine zusätzliche Menge an kohlenstoffhaltigen Reduktionsmitteln zugeführt. Diese zusätzliche Menge kann in Form von Koks, Kohle, Öl, Kunststoffen, Erdgas, Rückführgasen, Koksofengas oder Abfallgas zugeführt werden, um die Produktion der Rohsynthesegasmenge zu maximieren. Die Sauerstoffmenge wird an die Brennstoffmenge angepasst und ist ebenfalls größer als die für die reine Eisenerzeugung notwendige Menge. Der Hochofenprozess wird erfindungsgemäß so geführt, dass das Gichtgas bereits CO und H₂ in einem Mengenverhältnis enthält, das der gewünschten Synthesegaszusammensetzung entspricht oder dieser zumindest nahe kommt. Ferner wird der Hochofenprozess vorzugsweise so geführt, dass der CO₂-Anteil des als Gichtgas abgezogenen Rohsynthesegases gering ist. Zur Steuerung des CO/H₂-Anteils wird dem Hochofen zusätzlich CO₂ zugeführt. Das Kohlendioxid kann mit dem Koks zu Kohlenmonoxid reagieren: C + CO₂ → 2 CO. Weiterhin kann Kohlendioxid zur Umwandlung mit Wasserstoff zu Kohlenmonoxid und Wasserdampf eingesetzt werden: CO₂ + H₂ → CO + H₂O. Wenn Wasserdampf ebenfalls als Zusatzkomponente zur Steuerung des CO/H₂-Gehaltens des den Hochofen verlassenden Gichtgases zugegeben wird, kann der Wasserdampf bei den hohen Temperaturen im Hochofen mit Koks zu Kohlenmonoxid und Wasserstoff reagieren: C + H₂O → CO + H₂. Ferner kann der Wasserdampf auch zur Konvertierung von Kohlenmonoxid zu Kohlendioxid und Wasserstoff genutzt werden: CO + H₂O → CO₂ + H₂.

Mit dem erfindungsgemäßen Verfahren ist es möglich, ein spezifikationsgerechtes Synthesegas deutlich kostengünstiger zu erzeugen, da eine vorhandene Anlage für die Eisenerzeugung genutzt wird. Auch die Betriebskosten sind bei der erfindungsgemäßen gleichzeitigen Erzeugung von Synthesegas und Eisen niedriger, da der größte Teil des zugeführten Brennstoffes bereits für die Eisenerzeugung benötigt wird. Die CO₂-Bilanz fällt gegenüber konventionellen Verfahren deutlich günstiger aus. Aus dem zugeführten Brennstoff werden gleichzeitig zwei Produkte hergestellt. Da das Gichtgas als Rohsynthesegas genutzt wird, können neben Eisen zusätzliche Wertstoffe erzeugt werden. Das Gichtgas wird nicht nur thermisch zur Vorheizung eines Brenngases genutzt, sondern es wird stofflich verwertet und bildet den Ausgangsstoff für weitere Produkte, wie beispielsweise Diesel, Benzin oder Methanol. Gegenüber einem konventionellen Hochofenprozess ist nur ein geringer Zusatzbedarf an Brennstoff erforderlich. Dieser ist deutlich niedriger als die Summe an Brennstoff für getrennt betriebene Verfahren. Als Ausgleich für den zusätzlichen Brennstoffbedarf erhält man einen weiteren Wertstoff, z.B. Dieselkraftstoff, für den bei einer konventionellen Herstellung durch Kohlevergasung annähernd noch einmal die gleiche Menge an Kohle vergast werden müsste.

Durch den Betrieb des Hochofenprozesses mit technisch reinem Sauerstoff können hohe Reaktionstemperaturen im Hochofen erreicht werden. Dies ermöglicht es, auf eine Vorheizung des Sauerstoffs zu verzichten. Durch die Verwendung von technisch reinem Sauerstoff zur Erzeugung des Rohsynthesegases ergibt sich eine höhere Ausbeute an Synthesegas, da im Gegensatz zur konventionellen Fahrweise mit Luftvorheizung der Verbrauch an Gichtgas zur Vorheizung entfällt. Sollte eine Vorheizung des Sauerstoffs dennoch erforderlich sein, so ist die Menge des dazu benötigten Gichtgases geringer als beim herkömmlichen Hochofenprozess, da der zu erwärmende Sauerstoffstrom viel kleiner ist als ein Luftstrom, der zusätzlich Stickstoff enthält. Beim Einsatz von reinem Sauerstoff enthält das produzierte Rohsynthesegas ferner keinen Stickstoff. Dies erleichtert die weitere Aufarbeitung erheblich, da eine aufwendige Stickstoffabtrennung entfällt. Durch die Verwendung von reinem Sauerstoff wird schließlich auch die CO₂-Bilanz des Hochofenprozesses verbessert, da kein Gichtgas für die Luftvorheizung verloren geht. Bei einem konventionellen Hochofenprozess wird ca. ein Drittel des Gichtgases für die Luftvorheizung benötigt, das dabei zu CO₂ umgesetzt wird. Bei dem erfindungsgemäßen sauerstoffgeführten Prozess steht diese Menge zusätzlich als Synthesegas zur Verfügung und kann zur Erzeugung von Wertstoffen eingesetzt werden.

Eine weitere Ausgestaltung des erfindungsgemäßen Verfahrens sieht vor, dass dem Hochofen Stoffe zugeführt werden, die den Schwefelgehalt im Rohsynthesegas minimieren. Dazu wird vorzugsweise Calciumcarbonat zusammen mit dem Eisenerz zugeführt.

Gemäß einer weiteren vorteilhaften Ausgestaltung des erfindungsgemäßen Verfahrens wird ein Teil des Rohsynthesegases in den Hochofen zurückgeführt. Das Rohsynthesegas enthält Kohlenmonoxid, das wiederum als Reduktionsmittel für das Eisenerz dient.

Das den Hochofen als Gichtgas verlassende Rohsynthesegas wird entstaubt und kann dann als Wertstoff genutzt werden. Sofern das als Gichtgas anfallende Rohsynthesegas noch kein spezifikationsgerechtes CO/H₂-Verhältnis aufweist, bietet es sich an, dem Hochofengas Kohlenmonoxid und/oder Wasserstoff aus externen Quellen zuzumischen oder das Rohsynthesegas mittels CO-Konvertierung unter Zusatz von Wasserdampf zu H₂ und CO₂ umzusetzen.

So kann das dem Hochofen zugeführte CO₂ auch aus dem Rohsynthesegas gewonnen werden, welches den Hochofen verlässt. Zweckmäßig wird das dem Hochofen zugeführte CO₂ aus dem Rohsynthesegas gewonnen, welches einer CO-Konvertierung unterzogen wurde.

Bei einer besonders vorteilhaften Verfahrensvariante wird in einem Koksofen ein wasserstoffhaltiges Rohgas erzeugt, das dem Hochofengas zugemischt wird. Dabei erweist es sich als günstig, das Kokereigas zunächst zu reinigen und in einer Adsorptionsanlage eine Trennung des Wasserstoffs vom Restgas vorzunehmen. Der Wasserstoffstrom kann dann gezielt zu dem aus dem Hochofen abgezogenen Gichtgas dosiert werden. Diese koordinierte Synthesegasproduktion aus einem Hochofenprozess und einem Koksofenprozess erweist sich als besonders günstig, da im Hochofen ein kohlenmonoxidreiches Rohgas und im Koksofen ein wasserstoffreiches Rohgas erzeugt wird. Beide Prozesse ergänzen sich bei der Synthesegasproduktion. Zudem befinden sich die meisten Kokereien in der Nähe von Hochöfen, da für den Hochofenprozess Koks benötigt wird.

Als externe Wasserstoffquelle kann auch eine Kohlevergasungsanlage, eine Erdgas-POX, ein autothermer Reformer oder ein Steamreformer dienen. Auch kann durch eine gezielte Fahrweise ein zweiter Hochofen auf die Wasserstoffproduktion eingestellt werden.

Ein weiterer Vorteil der Erfindung besteht darin, dass das Synthesegas von mehreren Hochöfen zusammengeführt werden kann, wenn sich z.B. mehrere Hochöfen an einem Standort oder in der Nähe eines Standortes befinden, und dass die weitere Synthese und Produktaufarbeitung in einem größeren Maßstab, d.h. in einem Raffineriemaßstab, und damit in der Summe kostengünstiger durchgeführt werden kann. Eventuell kann die Aufarbeitung auch in einer vorhandenen Raffinerie durchgeführt werden. Auch weitere Synthesegas produzierende Anlagen, wie z.B. Kohlevergasungsanlagen, Vergasungsanlagen aus nachwachsenden Rohstoffen, und dergleichen können kostengünstig in den Gesamtkomplex integriert werden.

Das bei dem erfindungsgemäßen Verfahren hergestellte Rohsynthesegas kann in unterschiedlichen Produktionsverfahren zur Anwendung kommen. So kann es beispielsweise im Rahmen eines Fischer-Tropsch-Verfahrens zur Erzeugung von Kraftstoffen eingesetzt werden. Ebenfalls kann es im Rahmen einer Methanolsynthese verwendet werden. Das Methanol kann dann nach dem MTG-Verfahren zu Benzin umgesetzt werden. Auch ist es denkbar, dass das Synthesegas zu SNG umgewandelt wird. Ebenso kann das erzeugte Synthesegas für eine Oxo-Synthese oder zur Ammoniakerzeugung verwendet werden.

## Patentansprüche

1. Verfahren zur gleichzeitigen Herstellung von Eisen und eines CO und H₂ enthaltenden Rohsynthesegases unter Verwendung eines Hochofens, der mit Eisenerzen und kohlenstoffhaltigen Reduktionsmitteln beschickt wird, wobei dem Hochofen technisch reiner Sauerstoff für den Hochofenprozess und zur Erzeugung des Rohsynthesegases zugeführt wird und wobei dem Hochofen zusätzlich CO₂ zugeführt wird, um das CO/H₂-Verhältnis des den Hochofen als Gichtgas verlassenden Rohsynthesegases zu steuern und/oder um eine Einblastemperatur der Sauerstoffeindüsung zu moderieren,
**dadurch gekennzeichnet, dass** die dem Hochofen zugeführte Menge an kohlenstoffhaltigen Reduktionsmitteln größer ist als die für die Eisenherstellung benötigte Brennstoffmenge,
dass mindestens ein Teil des Rohsynthesegases mittels CO-Konvertierung unter Zusatz von Wasserdampf zu H₂ und CO₂ umgesetzt wird und dass in einer nachgeschalteten Druckwechseladsorptionsanlage Wasserstoff gewonnen wird, wobei ein CO₂-reicher Abgasstrom aus der Druckwechseladsorptionsanlage zur Temperaturmodifikation wieder in den Hochofen zurückgeführt wird, so dass das dem Hochofen zugeführte CO₂ aus dem Rohsynthesegas, welches einer CO₂-Konvertierung unterzogen wurde, gewonnen wird.

2. Verfahren nach Anspruch 1, wobei dem Hochofen zusätzlich über die für eine Eisenerzeugung notwendige Brennstoffmenge hinaus kohlenstoffhaltige Reduktionsmittel in Form von Koks, Kohle, Öl, Kunststoffen, Erdgas, Rückführgasen, Koksofengas oder Abfallgas zugeführt wird, um die als Gichtgas anfallende Rohsynthesegasmenge zu maximieren.

3. Verfahren nach Anspruch 1 oder 2, wobei dem Hochofen Stoffe zugeführt werden, um den Schwefelgehalt im Rohsynthesegas zu reduzieren.

4. Verfahren nach einem der Ansprüche 1 bis 3, wobei ein Teil des Gichtgases in den Hochofen zurückgeführt wird.

5. Verfahren nach einem der Ansprüche 1 bis 4, wobei das den Hochofen als Gichtgas verlassende Rohsynthesegas entstaubt wird.

6. Verfahren nach einem der Ansprüche 1 bis 5, **dadurch gekennzeichnet, dass** das dem Hochofen zugeführte CO₂ aus dem Rohsynthesegas gewonnen wird, welches den Hochofen verlässt.

## Claims

1. A method for the simultaneous production of iron and a raw syngas containing CO and H₂ using a blast furnace which is charged with iron ores and carbon-containing reduction agents, wherein the blast furnace is fed with technically pure oxygen for the blast furnace process and for production of the raw syngas and wherein CO₂ is additionally fed to the blast furnace, in order to control the CO/H₂ ratio of the raw syngas leaving the blast furnace as blast furnace gas and/or to moderate a blow-in temperature of the oxygen injection,
**characterized in that** the quantity of carbon-containing reduction agents fed to the blast furnace is greater than the quantity of fuel needed for iron production,
that at least part of the raw syngas is converted into H₂ and CO₂ by means of CO conversion with the addition of water vapour and that hydrogen is obtained in a downstream pressure swing adsorption plant, wherein a CO₂-rich exhaust gas flow from the pressure swing adsorption plant is fed back again to the blast furnace for temperature modification, so that the CO₂ fed to the blast furnace is obtained from the raw syngas which has undergone a CO₂ conversion.

2. The method according to claim 1, wherein carbon-containing reduction agents in the form of coke, coal, oil, plastics, natural gas, recycled gases, coke oven gas or waste gas are fed to the blast furnace in addition via the quantity of fuel needed for iron production, in order to maximize the quantity of raw syngas occurring as blast furnace gas.

3. The method according to claim 1 or 2, wherein substances are fed to the blast furnace to reduce the sulphur content in the raw syngas.

4. The method according to one of claims 1 to 3, wherein part of the blast furnace gas is fed back into the blast furnace.

5. The method according to one of claims 1 to 4, wherein the raw syngas leaving the blast furnace as blast furnace gas has the dust removed.

6. The method according to one of claims 1 to 5, **characterized in that** the CO₂ fed to the blast furnace is obtained from the raw syngas which leaves the blast furnace.

## Revendications

1. Procédé pour la production simultanée de fer et d'un gaz de synthèse brut contenant du CO et de l'H₂ en utilisant un haut fourneau qui est chargé avec des minerais de fer et des agents réducteurs à teneur en carbone, dans lequel on alimente le haut fourneau avec de l'oxygène techniquement pur pour le processus de haut fourneau et pour la production du gaz de synthèse brut et dans lequel on alimente additionnellement le haut fourneau avec du CO₂ pour réguler le rapport CO/H2 du gaz de synthèse brut quittant le haut fourneau en tant que gaz de haut fourneau et/ou pour modérer une température d'insufflation de l'injection d'oxygène,
**caractérisé en ce que** la quantité d'agents réducteurs à teneur en carbone alimentant le haut fourneau est supérieure à la quantité de combustible nécessaire pour la production de fer,
**en ce qu'**au moins une partie du gaz de synthèse brut est transformée en H₂ et CO₂ au moyen d'une conversion CO avec addition de vapeur d'eau, et **en ce que** de l'hydrogène est récupéré dans une installation d'adsorption à pression alternée montée en aval, dans lequel un flux de gaz d'échappement riche en CO₂ est de nouveau reconduit dans le haut fourneau à partir de l'installation d'adsorption à pression alternée pour la modification de la température de manière à ce que le CO₂ alimentant le haut fourneau soit obtenu à partir du gaz de synthèse brut ayant été soumis à une conversion CO₂.

2. Procédé selon la revendication 1, dans lequel le haut fourneau est additionnellement alimenté, au-delà de la quantité de combustible nécessaire pour une production de fer, avec des agents réducteurs à teneur en carbone sous la forme de coque, charbon, pétrole, matières synthétiques, gaz naturel, gaz recyclés, gaz de cokerie ou gaz résiduels pour maximiser la quantité de gaz de synthèse brut se présentant en tant que gaz de haut fourneau.

3. Procédé selon la revendication 1 ou 2, dans lequel le haut fourneau est alimenté avec des substances pour réduire la teneur en soufre dans le gaz de synthèse brut.

4. Procédé selon l'une des revendications 1 à 3, dans lequel une partie du gaz de haut fourneau est reconduite dans le haut fourneau.

5. Procédé selon l'une des revendications 1 à 4, dans lequel le gaz de synthèse brut quittant le haut fourneau en tant que gaz de haut fourneau est dépoussiéré.

6. Procédé selon l'une des revendications 1 à 5, **caractérisé en ce que** le CO2 alimentant le haut fourneau est obtenu à partir du gaz de synthèse brut qui quitte le haut fourneau.
